# EUROPÄISCHE PATENTSCHRIFT

(11) **EP 4 400 759 B1**
(45) Veröffentlichungstag und Bekanntmachung des Hinweises auf die Patenterteilung: **27.05.2026**
(21) Anmeldenummer: 23151489.4
(22) Anmeldetag: 13.01.2023
(51) Int. Cl.: F17C 6/00, F17C 9/00, F17C 13/04

(54) **KRYOSPEICHERSYSTEM**
CRYOSTORAGE SYSTEM
SYSTÈME DE STOCKAGE CRYOGÉNIQUE

(43) Veröffentlichungstag der Anmeldung: 17.07.2024
(73) Patentinhaber: MAGNA STEYR Fahrzeugtechnik GmbH & Co KG, 8041 Graz (AT)
(72) Erfinder: BARTLOK, Guido, 8010 Graz (AT)
(74) Vertreter: Zangger, Bernd

(56) Entgegenhaltungen:
- DE-A1- 102019 205 601
- US-A1- 2002 069 857
- US-A1- 2012 317 995
- US-B2- 11 415 084
- US-B2- 7 356 996
- US-B2- 7 410 348
- PESCHKA ET AL: "Liquid hydrogen pumps for automotive application", INTERNATIONAL JOURNAL OF HYDROGEN ENERGY, ELSEVIER, AMSTERDAM, NL, vol. 15, no. 11, 1 January 1990 (1990-01-01), pages 817 - 825, XP025639691, ISSN: 0360-3199, [retrieved on 19900101], DOI: 10.1016/0360-3199(90)90018-T

## Beschreibung

### Gebiet der Erfindung

Die vorliegende Erfindung betrifft ein Kryospeichersystem, umfassend einen Kryobehälter zur Speicherung von Wasserstoff, insbesondere als mobiles Kryospeichersystem zur Speicherung von Wasserstoff für den Antrieb eines Kraftfahrzeuges.

### Stand der Technik

Es ist bekannt, dass mobile Kryospeichersysteme verwendet werden, um den für den Antrieb erforderlichen Wasserstoff in einem Kraftfahrzeug mitzuführen.

Zur Entnahme aus dem Speicherbehälter wird Druck in dessen Innerem erhöht, was üblicherweise durch Beheizen des Behälterinhaltes, entweder mit Fremdenergie oder durch einen im Innentank des Speicherbehälters angeordneten Wärmeübertrager erfolgt, der von bereits verdampftem Gas durchströmt ist.

In den Gebrauchsmuster AT 009 291 U1 und AT 010 015 U1 sind Entnahmevorrichtungen beschrieben, die die mit der üblichen Vorrichtung verbundenen Nachteile dadurch teilweise beheben, das gasförmiges Gas von einer Pumpe rückgeführt und in den Speicherbehälter entweder in den Gasraum oder bodennah in die Flüssigkeit eingeblasen wird.

Alternativ kann eine Fluidförderung durch eine Flüssigkeitspumpe mit Linearantrieb und Konditionierung mittels nachgeschaltetem Wärmeübertrager erfolgen, wie aus der US 2012317995A1 bekannt.

Allerdings haben bekannte Lösungen einige Nachteile, zum Beispiel:
- Bei bekannten Lösungen muss der Betriebsdruck im Innentank größer sein als der Versorgungsdruck für den Verbraucher. Dadurch verringert sich die nutzbare Speicherkapazität des Innenbehälters, da die Dichte des tiefkalten Flüssiggases mit steigendem Druck abnimmt.
- Ein höherer normaler Arbeitsdruck im Innentank verringert die Druckdifferenz bis zum Ansprechdruck des Boil-off Ventils, das heißt, die Druckaufbauzeit verringert sich.
- Druckaufbau im Innentank ist mit einem passiven System (geschlossener Innentank-Wärmeübertrager) nur bei gleichzeitiger Entnahme für den Verbraucher möglich. Das bedeutet in der Praxis, dass nach dem Betanken - das bei einem unter dem Betriebsdruck liegenden Druck erfolgt - dem Verbraucher zunächst nur sehr kleine Gasmengen zugeführt werden können.
- Bei einem alternativen Konzept, einem sog. aktiven System, wird ein leistungsstarkes Gebläse verwendet, dass außerhalb des Systems angeordnet ist und über eine Rohrleitungsverbindung warmen Wasserstoff mit geringer Druckdifferenz in den Innentank fördert und dadurch dessen Druckniveau erhöht, unabhängig von einer gleichzeitigen Entnahme für den Verbraucher. Gebläse und erforderliche Hochvoltelektronik erfordert Leistungsaufnahmen im KW-Bereich.

Aus der US 2002/069857 A1 ist ein Verfahren zum Fördern eines kryogen gespeicherten Brennstoffs im flüssigen Zustand bekannt, bei dem der kryogene Brennstoff aus einem wärmeisolierten Brennstofftank entnommen und durch eine Fördereinrichtung in eine Brennstoffleitung gedrückt wird, wobei zumindest zeitweise im Rahmen des Betriebs der Fördereinrichtung der Druck im Kraftstofftank um einen Betrag erhöht wird, der größer ist als die Differenz zwischen einem auf der Ansaugseite der Fördereinrichtung auftretenden Abfall des Zulaufdrucks und der Differenz zwischen dem herrschenden Tankdruck an einem Pumpeneinlasspunkt und dem durch die momentane Kraftstofftemperatur vorgegebenen Siededruck.

Die DE 10 2019 205601 A1 zeigt ein Verfahren zum Betreiben eines Kraftstoffsystems, das der Versorgung eines Verbrennungsmotors eines Kraftfahrzeugs mit Erdgas dient, wobei das Erdgas im Wesentlichen in flüssiger Form in einem Tank an Bord des Kraftfahrzeugs bevorratet und mit Hilfe einer im Tank aufgenommenen Vorförderpumpe aus dem Tank entnommen und über eine Zulaufleitung einer Hochdruckpumpe zur Beaufschlagung mit Hochdruck zugeführt wird, wobei mit Hilfe der Vorförderpumpe sowohl Erdgas aus einer Flüssigphase als auch Erdgas aus einer ebenfalls im Tank vorhandenen Gasphase angesaugt wird und der im flüssigen Erdgas in Form von Gasblasen enthaltene Gasanteil auf der Druckseite der Vorförderpumpe unter Vorförderdruck zumindest teilweise kondensiert wird.

Aus der US 7 356 996 B2 ist eine Vorrichtung zur Aufnahme eines kryogenen Fluids und zur Entnahme desselben daraus bekannt, wobei die Vorrichtung umfasst: (a) einen doppelwandigen vakuumisolierten Behälter, der einen Kryoraum zur Aufnahme des kryogenen Fluids definiert; (b) eine Pumpenbaugruppe, die eine Pumpe mit einem Saugeinlass, der innerhalb des kryogenen Raums angeordnet ist, und mindestens ein langgestrecktes Element umfasst, das sich von der Pumpe zu einer Antriebseinheit erstreckt, die außerhalb des kryogenen Raums angeordnet ist, und wobei das langgestreckte Element einen langgestreckten nichtmetallischen Abschnitt umfasst, der eine Wärmeleitfähigkeit aufweist, die geringer ist als die eines strukturell äquivalenten langgestreckten Elements aus rostfreiem Stahl mit derselben Länge; und (c) eine Leitung mit einem Ende, das innerhalb des Kryoraums angeordnet und mit einem Auslass der Pumpenanordnung verbunden ist, und einem anderen Ende außerhalb des Kryoraums.

### Zusammenfassung der Erfindung

Es ist eine Aufgabe der Erfindung, ein Kryospeichersystem der genannten Art anzugeben, das zumindest einige der genannten Probleme reduzieren kann und insbesondere ein Kryospeichersystem, umfassend einen Kryobehälter zur Speicherung von Wasserstoff, anzugeben, dass auf kostengünstige Art einen günstigen Betriebsdruck in einem Innentank und eine zuverlässige Entnahme des Mediums aus dem Innentank ermöglicht.

Die Lösung der Aufgabe erfolgt durch ein Kryospeichersystem mit den Merkmalen gemäß Anspruch 1.

Das Kryospeichersystem umfasst einen Kryobehälter zur Speicherung von Wasserstoff, mit einem Innentank und einem Außenbehälter, wobei im Innentank des Kryobehälters mindestens eine Kryopumpe angeordnet ist, wobei die Kryopumpe im Normalbetrieb vollständig von kryogenem Fluid umgeben ist und/oder wobei der Antrieb der Kryopumpe dazu eingerichtet ist, bei tiefkalten Temperaturen zu arbeiten, wobei die Kryopumpe flüssigen und gasförmigen Wasserstoff ein- oder mehrstufig zu einem Verbraucher fördert, mit höherem Druck als dem Druck im Innentank.

Erfindungsgemäß ist die Kryopumpe als Linearpumpe ausgebildet, die beidseitig fördert, mit einem linken und einem rechten Förderstrom.

Erfindungsgemäß ist der linke und/oder der rechte Förderstrom der Linearpumpe dazu ausgebildet, wahlweise Gas oder Flüssigkeit zu fördern.

Erfindungsgemäß verfügt ein Kryospeichersystem im Innentank eines Kryobehälters über mindestens eine Kryopumpe. Durch die Kryopumpe kann flüssiger und gasförmiger Wasserstoff tiefkalt dem Innentank entnommen werden und - vorzugsweise über einen Wärmeübertrager, der den Wasserstoff erwärmt - zu einem Verbraucher gefördert werden. Die Förderung zum Verbraucher kann dabei mit einem Druck erfolgen, der höher ist, als der Druck im Innentank des Kryospeichersystems.

Die Kryopumpe ist im Innentank des Kryobehälters angeordnet, also in einem im Normalbetrieb tiefkalten Bereich des Kryospeichersystems. Daher ist die Kryopumpe im Normalbetrieb vollständig von kryogenem Fluid umgeben. Der Antrieb der Kryopumpe ist dazu eingerichtet, bei tiefkalten Temperaturen zu arbeiten.

Durch die Verwendung einer Kryopumpe im Innentank können folgende Vorteile erreicht werden:
- Der Betriebsdruck im Innentank lässt sich minimieren und kann kleiner sein als der kleinstmögliche Versorgungsdruck des Verbrauchers. Ein geringer Betriebsdruck im Innentank ermöglicht längere Druckaufbauzeiten oder geringere Designdrücke und damit geringere Wandstärken, das heißt leichtere Innentanks bzw. komplexere Speicherbehälter-Geometrien sind realisierbar. Die Backgas-Verluste bei der Flüssiggas-Betankung können durch den geringeren Innentankdruck reduziert werden. Die verbesserten thermodynamischen Verhältnisse im Innentank ermöglichen höhere Betankungsgeschwindigkeiten. Die Änderung der Förderhöhe (Förderdruck) beziehungsweise der Fördermenge wird beschleunigt bzw. erleichtert. Der Energieverbrauch für den Betrieb der Kryo-Pumpe, die gänzlich der kryogenen Fluidtemperatur ausgesetzt ist, ist deutlich geringer als für ein aktives System mit Gebläse oder mit Pumpen bzw. Kompressoren deren Antrieb und / oder Verdichtungsarbeit etwa bei Umgebungstemperatur stattfindet. Bei geeigneter Konfiguration kann wahlweise Flüssigkeit und Gas gefördert werden. Das ermöglicht eine Abstimmung zwischen Entnahmemassenstrom und Druckabsenkung durch Volumenarbeit.

Über die Kryopoumpe wird bevorzugt der tiefkalte Wasserstoff einem Wärmeübertrager zugeführt, der den Wasserstoff erwärmt und vom Wärmeübertrager weiter zum Verbraucher geleitet.

Bevorzugt ist die Kryopumpe in Nähe des Bodens des Innentanks ausgebildet und ist im Normalbetrieb von flüssigem Wasserstoff umgeben.

Vorzugsweise ist zumindest an einem Ansaugstutzen der Kryopumpe eine Gasentnahmeleitung ausgebildet, deren offenes Ende in Nähe der Decke des Innentanks ausgebildet ist und/oder wobei sich am offenen Ende der Gasentnahmeleitung im Normalbetrieb gasförmiger Wasserstoff befindet, sodass über die Gasentnahmeleitung gasförmiger Wasserstoff durch die Kryopumpe aus dem Innentank entnommen werden kann. Die Gasentnahmeleitung ist somit dazu eingerichtet, dass gasförmiger Wasserstoff dem Innentank über die Gasentnahmeleitung entnommen werden kann. Die Gasentnahmeleitung kann als Verlängerung des Ansaugstutzens ausgeführt sein.

An dem selben oder an einem anderen Ansaugstutzen der Kryopumpe kann eine weitere Entnahmeleitung oder Entnahmeöffnung zur Entnahme von Flüssigkeit ausgebildet sein.

Erfindungsgemäß kann zumindest an einem Ansaugstutzen der Kryopumpe wahlweise gasförmiger oder flüssiger Wasserstoff gefördert werden. Bevorzugt ist ein Absperrventil für das Umschalten zwischen gasförmigem und flüssigem Wasserstoff an dem Ansaugstutzen der Kryopumpe eingerichtet. Das Absperrventil ist vorzugsweise in der Nähe der Kryopumpe und/oder des Ansaugstutzens der Kryopumpe angeordnet.

Besonders bevorzugt ist der linke und/oder der rechte Förderstrom der Linearpumpe dazu ausgebildet, wahlweise Gas oder Flüssigkeit zu fördern, über ein pumpnahes Absperrventil für das Umschalten zwischen gasförmigem und flüssigem Wasserstoff, also von LH2 auf GH2.

Bevorzugt ist der Kryobehälter dazu eingerichtet, dass ein Teilstrom des erwärmten Wasserstoffs, also des entnommenen Wasserstoffs nach dem Wärmeübertrager, über eine Gasrückführleitung in den Innentank zurückgeführt werden kann, um den Innentankdruck zu erhöhen und bevorzugt auf einem Mindestdruck zu halten. Vorzugsweise ist in der Gasrückführleitung ein Absperrventil für die Gasrückführung zum Innentank angeordnet.

Vorzugsweise ist ein Druckminderer, bevorzugt mit nachgeschaltetem Drucksicherheitsventil, in der Gasrückführleitung für die Gasrückführung zum Innentank verbaut. Hierdurch kann der Druck für die Gasrückführung in den Innentank begrenzt werden.

Bevorzugt ist zwischen der Kryopumpe und dem Verbraucher ein Pufferbehälter für warmen Wasserstoff angeordnet. Hierdurch kann eine eventuell auftretende schwankende Förderleistung der Kryopumpe ausgeglichen werden.

Vorzugsweise ist in einer das geförderte Medium ableitenden Druckleitung der Kryopumpe ein federbelastetes Rückschlagventil oder ein Wechselventil angeordnet, so dass die das geförderte Medium ableitende Druckleitung am federbelasteten Rückschlagventil oder am Wechselventil in eine Einlassleitung in den Innentank übergeht.

Der Innentank kann über eine Betankungsschnittstelle betankt werden, wobei bevorzugt die Betankung zumindest abschnittsweise über eine Entnahmeleitung erfolgt, wobei besonders bevorzugt die Betankung über das federbelastete Rückschlagventil oder das Wechselventil und die Einlassleitung in den Innentank erfolgt.

Vorzugsweise weist das Wechselventil einen integrierten Schwebekörper auf, wobei das Eigengewicht des Schwebekörpers bei einer Betankung in einer unteren End-Position hält, so dass die Einlassleitung zur Befüllung des Innentanks freigegeben ist. Bei einer Inbetriebnahme der Kryopumpe wird der Schwebekörper durch den Förderstrom angehoben, so dass er die Einlassleitung zum Innentank verschließt und der Förderstrom ausschließlich zum Verbraucher gepumpt wird.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines nicht erfindungsgemäßen Kryospeichersystems.
- Fig. 2: ist eine schematische Darstellung eines Teiles des nicht erfindungsgemäßen Kryospeichersystems gemäß Fig. 1 in einer anderen Ausführungsvariante.
- Fig. 3: ist eine schematische Darstellung eines Teiles des nicht erfindungsgemäßen Kryospeichersystems gemäß Fig. 1 in einer anderen Ausführungsvariante.
- Fig. 4: ist eine schematische Darstellung eines erfindungsgemäßen Kryospeichersystems in einer Ausführungsvariante.
- Fig. 5: ist eine schematische Darstellung eines erfindungsgemäßen Kryospeichersystems in einer anderen Ausführungsvariante.
- Fig. 6: ist eine schematische Darstellung eines nicht erfindungsgemäßen Kryospeichersystems in einer anderen Ausführungsvariante.
- Fig. 7: ist eine schematische Detaildarstellung eines Wechselventils eines gemäß Fig. 6 in einem ersten Zustand.
- Fig. 8: ist eine schematische Detaildarstellung eines Wechselventils eines Kryospeichersystems gemäß Fig. 6 in einem zweiten Zustand.

### Detaillierte Beschreibung der Erfindung

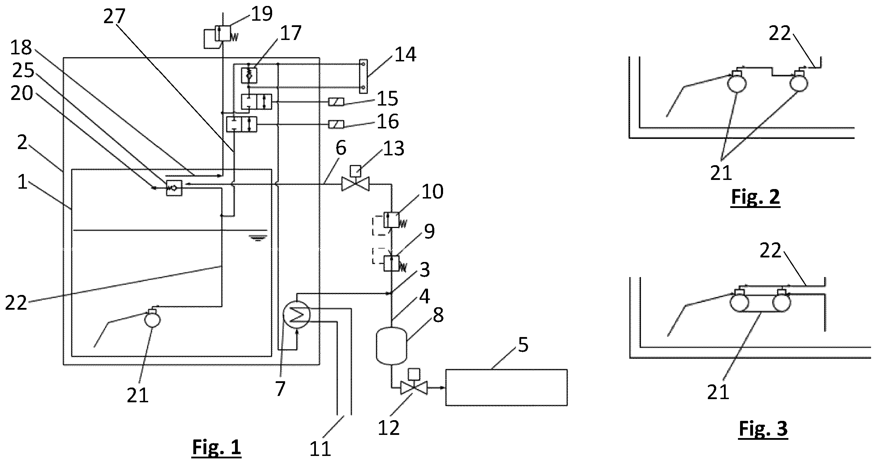

In Fig. 1 ist ein Kryospeichersystem dargestellt, welches einen Kryobehälter umfasst, der einen Innentank 1 und einen Außenbehälter 2 umfasst, mit einem Isolationsraum als Zwischenraum zwischen Innentank 1 und Außenbehälter 2.

Das Kryospeichersystem kann tiefkalte kryogene Flüssigkeit aus dem Innentank 1 mittels einer leistungsgesteuerten druckerhöhenden Kryopumpe 21 über eine Druckleitung 22 der Kryopumpe, die in eine Entnahmeleitung 27 übergeht und an einer Leitungsverbindung 3 in eine Versorgungsleitung 4 mündet, zu einem Verbraucher 5 fördern.

Die Kryopumpe 21 ist vollständig von kryogenem Fluid umgeben, d.h. auch der Antrieb der Pumpe 21 arbeitet bei tiefkalten Temperaturen, wodurch eine geringe elektrische Leistungsaufnahme für die Kaltgasverdichtung ermöglicht wird. Die Kryopumpe 21 ist in Bodennähe des Innentanks 1 angeordnet und vollständig von flüssigem Wasserstoff umgeben. Gas kann zudem durch Öffnen eines GH2 Tankventils 15 und/oder Flüssigkeit durch Öffnen eines LH2 Tankventils 16 aus dem Innentank 1 in die Entnahmeleitung 27 strömen. Gas kann dabei über eine kombinierte Sicherheits- und Gasentnahmeleitung 18 dem Innentank 1 entnommen werden. Nach dem GH2 Tankventil 15 kann ein Rückschlagvenil 17 für die Gasentnahme vorgesehen sein. Aus der kombinierte Sicherheits- und Gasentnahmeleitung 18 kann Gas auch durch ein Druckentlastungssicherheitsventil 19 nach außen abgegeben werden.

Das kryogene Fluid wird nach der Entnahme aus dem Innentank 1, insbesondere nach der Kryopumpe 21 und nach den Tankventilen 15, 16, über einen Wärmeübertrager 7 geleitet, dabei durch Wärmezufuhr, vorzugweise mittels Kühlwassers 11 des Verbrauchers 5, vollständig in die Gasphase überführt und zugleich für den Verbraucher 5 ausreichend erwärmt. Die Kryopumpe 21 fördert den Wasserstoff bei Bedarf mit höherem Druck zum Verbraucher 5 als im Innentank 1 vorliegt. Durch die Entnahme von Kraftstoff aus dem Kryospeichersystem sinkt der Druck und die Kraftstoffmenge in dessen Innentank 1.

Um eine eventuelle auftretende schwankende Förderleistung der Kryopumpe 21 auszugleichen, kann zusätzlich zwischen Pumpe 21 und Verbraucher 5, insbesondere in der Versorgungsleitung 4, ein Pufferbehälter 8 für warmen Wasserstoff angeordnet werden. In der Versorgungsleitung 4 kann vor dem Verbraucher 5 ein Absperrventil 12 für die H2-Versorgung zum Verbraucher 5 angeordnet sein.

Das Kryospeichersystem kann über eine Betankungsschnittstelle 14 betankt werden. Die Betankung kann abschnittsweise über die Entnahmeleitung 27 und eine LH2 Einlassleitung 20 in den Innentank 1 erfolgen.

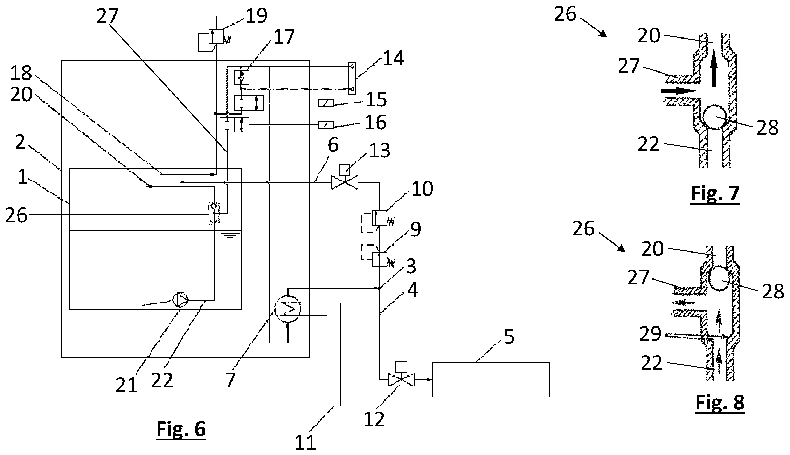

In der das geförderte Medium ableitenden Druckleitung 22 der Kryopumpe 21 kann ein federbelastetes Rückschlagventil 25 (Fig. 1 -5) oder ein Wechselventil 26 (Fig. 6 - 8) angeordnet sein, so dass die das geförderte Medium ableitende Druckleitung 22 am federbelasteten Rückschlagventil 25 oder am Wechselventil 26 in eine Einlassleitung 20 in den Innentank 1 übergeht. Die Betankung kann dann über die Entnahmeleitung 27 und über das federbelastete Rückschlagventil 25 oder das Wechselventil 26 und über die Einlassleitung 20 in den Innentank 1 erfolgen.

Besteht Bedarf den Druck im Innentank 1 des Kryospeichersystems zu erhöhen bzw. zu halten, kann Gas über Ventil 13 in einer Gasrückführleitung 6, die an der Leitungsverbindung 3 von der Entnahmeleitung 27 nach dem Wärmetauscher 7 abzweigt, zurück in den Innentank 1 transferiert werden. Um den Druck für die Gasrückführung in den Innentank 1 zu begrenzen, kann bei Bedarf ein Druckminderer 9 mit nachgeschaltetem Drucksicherheitsventil 10 in der Gasrückführleitung 6 verbaut werden. Während Fig. 1 eine einstufige Druckerhöhung mit Gasrückführung zeigt, zeigt die Fig. 2 eine Variante mit einer seriellen Pumpanordnung für eine zweistufige Druckerhöhung mit Gasrückführung.

Besteht Bedarf für sehr hohe Versorgungsdrücke (überkritisch, zum Beispiel mehr als 20 bar) kann der ersten Kryopumpstufe mindestens eine weitere Kryopumpstufe in Reihe nachgeschaltet werden (vgl. Fig. 2). Dabei wird der Enddruck der ersten Kryopumpe 21 zum Ansaugdruck der zweiten Kryopumpe 21. Die serielle Verschaltung ermöglicht höhere Enddrücke bei gleichzeitig niedriger Energieaufnahme für die Verdichtung des Kaltgases. Alternativ kann einer Kryopumpe 21 und dem Wärmeübertrager 7 auch außerhalb vom Tanksystem ein warmer Kompressor für die finale Verdichtung folgen.

Fig. 3 zeigt an Stelle der Förderpumpe eine besondere Ausführung der Pumpe in Form einer linear angetriebenen doppelseitig-verdrängenden Kryopumpe 21, mit zwei sich gegenüberliegenden Verdrängungsarbeitsräumen, mit jeweils separaten Ansaug- und Auslassstutzen für eine beidseitige Fluidförderung. Die Kryopumpe 21 ist somit als Linearpumpe ausgebildet, die das gespeicherte Medium beidseitig fördert - in Fig. 3 lediglich in Form des flüssigen Mediums.

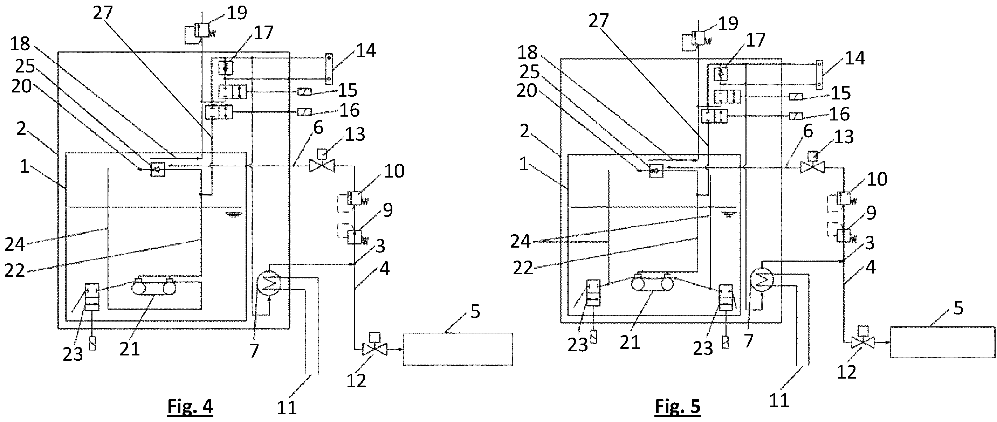

Fig. 4 zeigt eine Variante einer linear angetriebenen doppelseitig-verdrängenden Kryopumpe 21 mit separaten Ansaugstutzen (wie Fig. 3), wobei einseitig (in Fig. 4 an der linken Seite der Linearförderpumpe) ein Schaltventil 23 eingerichtet ist, zur wahlweisen Förderung von Flüssigkeit oder Gas. An diesem Ansaugstutzen der Kryopumpe 21 ist eine Gasentnahmeleitung 24 ausgebildet, deren offenes Ende in Nähe der Decke des Innentanks 1 ausgebildet ist und wobei sich am offenen Ende der Gasentnahmeleitung 24 im Normalbetrieb gasförmiger Wasserstoff befindet, sodass über die Gasentnahmeleitung 24 gasförmiger Wasserstoff durch die Kryopumpe 21 aus dem Innentank 1 entnommen werden kann. An der gegenüberliegenden zweiten Seite der Pumpe erfolgt nur eine Flüssigkeitsförderung. Im Übrigen ist das Kryospeichersystem gleich ausgebildet, wie die Varianten der Fig. 1 bis Fig. 3.

Auch Ausbildungen eines Kryospeichersystems mit einer Kryopumpe 21 die nicht als Linearförderpumpe ausgebildet ist, wie beispielsweise in Fig. 1 -3 dargestellt, können eine derartige Gasentnahmeleitung 24 und/oder ein derartiges Schaltventil 23 zur wahlweisen Förderung von Flüssigkeit oder Gas umfassen.

Durch Einbau von zusätzlichem Equipment im Innentank (Kryoventil(e), Rohrleitung(en)) kann durch gesteuerte wechselnde Ventilschaltstellung wahlweise Gas oder Flüssigkeit zum jeweiligen Ansaugstutzen zuströmen. Durch die Ventilsteuerung 23, zum Beispiel in Fig. 4, ist das Verhältnis von Gas- zu Flüssigkeitsentnahme veränderbar und somit auch das Verhältnis von Massestrom zum Verbraucher 5 zur Druckabsenkung im Innentank 1. Die Auswahlmöglichkeit zwischen Gas- oder Flüssigkeitsentnahme bietet einen zusätzlichen Freiheitsgrad, denn damit ist das Verhältnis von Massestrom zum Verbraucher 5 zur Druckabsenkung im Innentank 1 nicht mehr annähernd konstant und die jeweilige Größe nur über die Pumpfrequenz veränderbar, sondern jeweils flexibel.

Bei geöffnetem Ventil 23 flutet LH2 das Rohr bis zum Ansaugstutzen der Kryopumpe 21 und die Gasentnahmeleitung 24 hinauf bis auf Höhe des LH2-Levels (als Folge des hydrostatischen Ausgleichs). Wird das Ventil 23 geschlossen, wird zunächst der restliche LH2 aus der Rohrleitung des Ansaugstutzens gefördert, bevor gasförmiger Wasserstoff von oben durch die Gasentnahmeleitung 24 zum Ansaugstutzen nachströmt.

Gas kann somit über eine Gasentnahmeleitung 24 als verlängerter Ansaugstutzen der Kryopumpe 21 aus dem Innentank 1 entnommen werden. Durch ein pumpnahes Schaltventil 23 für das Umschalten von LH2 auf GH2, kann wahlweise Flüssigkeit oder Gas aus dem Innentank 1 durch die Pumpe 21 gefördert werden.

Wird eine Linearpumpe (Fig. 3 - 6) eingesetzt, die beidseitig fördert, ergeben sich verschiedene mögliche Varianten der Extraktion: Der linke und rechte Förderstrom können beispielsweise beide lediglich LH2, also flüssigen Wasserstoff, fördern, oder eine der beiden Seiten, beispielsweise links, wahlweise GH2 oder LH2 und die andere Seite lediglich LH2, oder beide Seiten können wahlweise GH2 oder LH2, also Gas oder Flüssigkeit, fördern, so dass das geförderte Medium insgesamt von 100% GH2 bis zu 100% LH2-Förderung variabel ist.

Fig. 4 zeigt von diesen Möglichkeiten eine Variante mit linear angetriebener doppelseitig-verdrängender Kryopumpe 21 mit verbundenen Ansaugstutzen, mit wahlweiser Förderung von Flüssigkeit oder Gas auf einer, nämlich hier der linken, Pumpenseite.

Fig. 5 zeigt eine Variante einer linear angetriebenen doppelseitig-verdrängenden Kryopumpe 21 mit separaten Ansaugstutzen, die beide wahlweise zur Förderung von Flüssigkeit und/oder Gas eingerichtet sind.

An jedem der beiden Ansaugstutzen der Kryopumpe 21 ist jeweils ein Schaltventil 23 für das Umschalten von LH2 auf GH2 angeordnet.

In den bisher beschriebenen Anordnungen ermöglicht jeweils ein federbelastetes Rückschlagventil 25 in der Befüllleitung im Innentank die Betankung mit Umgehung der Pumpe 21 und bevorzugt in den Gasraum. Es besteht dabei die Anforderung, dass der Betankungsdruck für das Öffnen des federbelasteten Rückschlagventils 25 höher ist, als der maximale Förderdruck der Kryopumpe 21. Das Rückschlagventil 25 bewirkt zwar einen zusätzlichen Strömungswiderstand für die Betankung aber vermeidet einen für den Förderstrom der Kryopumpe 21 zum Verbraucher 5.

Fig. 6 zeigt eine andere Konfiguration der Ventile zur Betankung, nämlich ein Wechselventil 26 im Innentank 1 - hier mit einer Schwebekörperposition bei Entnahme durch die Kryopumpe 21 - anstatt des federbelasteten Rückschlagventils 25.

Das Wechselventil 26 mit integriertem Schwebekörper 28 (vgl. Fig. 6 - 8) stellt eine alternative Ausführung für diese Funktion, der Umschaltung zwischen Entnahme und Betankung, dar. Das Wechselventil 26 ist an der Verbindungsstelle zwischen Druckleitung 22, Entnahmeleitung 27 und Einlassleitung 20 in den Innentank 1 angeordnet.

Der Schwebekörper 28 verbleibt bedingt durch sein Eigengewicht bei Betankung (Fig. 7) in der unteren End-Position und gibt die Einlassleitung 20 zur Befüllung des Innentanks frei. Durch Inbetriebnahme der Kryopumpe 21 wird der Schwebekörper 28 durch den Förderstrom derart angehoben/verlagert, dass er den Einlass der Befüllleitung zum Innentank 1, also der Einlassleitung 20, verschließt (Fig. 8), sodass der Förderstrom ausschließlich zum Verbraucher 5 gepumpt wird.

Die Vorteile dieser Alternative sind, dass die Betankung mit geringerem Strömungswiderstand erfolgen kann und Betankungsdruck und maximaler Förderdruck der Kryopumpe 21 voneinander unabhängig sind. Allerdings ergibt sich durch den im Wechselventil 26 integrierten Schwebekörper 28 ein zusätzlicher Strömungswiderstand für den Förderstrom der Kryopumpe 21 zum Verbraucher 5.

Beide Konfigurationen dieser Vorrichtung ermöglichen eine Druckentlastung der angrenzenden Leitungen und der Kryopumpe 21 in den Innentank 1 hinein, wenn sich eingeschlossenes Fluid durch Erwärmung ausdehnt.

Fig. 7 zeigt somit die Strömung im Wechselventil 26 bei Betankung. Das Eigengewicht des Schwebekörpers 28 hält bei einer Betankung den Schwebekörper 28 in einer unteren End-Position, so dass die Einlassleitung 20 zur Befüllung des Innentanks 1 freigegeben ist.

Fig. 8 zeigt die Strömung im Wechselventil 26 bei Entnahme über die Kryopumpe 21. Bei einer Inbetriebnahme der Kryopumpe 21 wird der Schwebekörper 28 durch den Förderstrom vom Ventilsitz 29 angehoben, so dass er die Einlassleitung 20 zum Innentank 1 verschließt und der Förderstrom ausschließlich zum Verbraucher 5 gepumpt wird.

### Bezugszeichenliste

- 1: Innentank des Primärspeichersystems
- 2: Außenbehälter
- 3: Leitungsverbindung
- 4: Versorgungsleitung
- 5: Verbraucher
- 6: Gasrückführleitung
- 7: Wärmeübertrager
- 8: Pufferbehälter
- 9: Druckminderer
- 10: Drucksicherheitsventil
- 11: Kühlwasserkreislauf
- 12: Absperrventil für H2 Versorgung zum Verbraucher
- 13: Absperrventil für Gasrückführung zum Innentank
- 14: Schnittstelle für Betankung
- 15: GH2 Tankventil
- 16: LH2 Tankventil
- 17: Rückschlagventil für die Gasentnahme
- 18: kombinierte Sicherheits- und Gasentnahmeleitung
- 19: Druckentlastungssicherheitsventil
- 20: LH2 Einlassleitung in den Innentank
- 21: Kryopumpe(n)
- 22: Druckleitung der Kryopumpe
- 23: Pumpnahes Schaltventil für das Umschalten von LH2 auf GH2
- 24: Gasentnahmeleitung als verlängerter Ansaugstutzen der Kryopumpe
- 25: Weiteres Rückschlagventil
- 26: Wechselventil
- 27: Entnahmeleitung
- 28: Schwebekörper
- 29: Ventilsitz

## Patentansprüche

1. Kryospeichersystem, umfassend einen Kryobehälter zur Speicherung von Wasserstoff, mit einem Innentank (1) und einem Außenbehälter (2),
wobei im Innentank (1) des Kryobehälters mindestens eine Kryopumpe (21) angeordnet ist, wobei die Kryopumpe (21) im Normalbetrieb vollständig von kryogenem Fluid umgeben ist und/oder wobei der Antrieb der Kryopumpe (21) dazu eingerichtet ist, bei tiefkalten Temperaturen zu arbeiten, wobei die Kryopumpe (21) flüssigen und gasförmigen Wasserstoff ein- oder mehrstufig zu einem Verbraucher (5) fördert, mit höherem Druck als dem Druck im Innentank (1),
**dadurch gekennzeichnet, dass** die Kryopumpe (21) als Linearpumpe ausgebildet ist, die beidseitig fördert, mit einem linken und einem rechten Förderstrom,
wobei der linke und/oder der rechte Förderstrom der Linearpumpe dazu ausgebildet ist, wahlweise gasförmigen oder flüssigen Wasserstoff zu fördern.

2. Kryospeichersystem nach Anspruch 1,
**dadurch gekennzeichnet, dass** zumindest an einem Ansaugstutzen der Kryopumpe (21) eine Gasentnahmeleitung (24) ausgebildet ist, deren offenes Ende in Nähe der Decke des Innentanks (1) ausgebildet ist und/oder wobei sich am offenen Ende der Gasentnahmeleitung (24) im Normalbetrieb gasförmiger Wasserstoff befindet, sodass über die Gasentnahmeleitung (24) gasförmiger Wasserstoff durch die Kryopumpe (21) aus dem Innentank (1) entnommen werden kann.

3. Kryospeichersystem nach Anspruch 1 oder 2,
**dadurch gekennzeichnet, dass** zumindest an einem Ansaugstutzen der Kryopumpe (21) wahlweise gasförmiger oder flüssiger Wasserstoff gefördert werden kann, bevorzugt über ein Absperrventil (23) für das Umschalten zwischen gasförmigem und flüssigem Wasserstoff.

4. Kryospeichersystem nach zumindest einem der vorhergehenden Ansprüche,
**dadurch gekennzeichnet, dass** der linke und/oder der rechte Förderstrom der Linearpumpe dazu ausgebildet ist, wahlweise gasförmigen oder flüssigen Wasserstoff zu fördern, über jeweils ein pumpnahes Absperrventil (23) für das Umschalten zwischen gasförmigem und flüssigem Wasserstoff.

5. Kryospeichersystem nach zumindest einem der vorhergehenden Ansprüche,
**dadurch gekennzeichnet, dass** der Kryobehälter dazu eingerichtet ist, dass ein Teilstrom des erwärmten Wasserstoffs, also des entnommenen Wasserstoffs nach einem Wärmeübertrager (7), über eine Gasrückführleitung (6) in den Innentank (1) zurückgeführt werden kann, um den Innentankdruck zu erhöhen, bevorzugt über ein Absperrventil (13) für die Gasrückführung zum Innentank (1).

6. Kryospeichersystem nach Anspruch 5,
**dadurch gekennzeichnet, dass** ein Druckminderer (9), bevorzugt mit nachgeschaltetem Drucksicherheitsventil (10), in der Gasrückführleitung (6) für die Gasrückführung zum Innentank (1) verbaut ist.

7. Kryospeichersystem nach zumindest einem der vorhergehenden Ansprüche,
**dadurch gekennzeichnet, dass** zwischen der Kryopumpe (21) und dem Verbraucher (5) ein Pufferbehälter (8) für warmen Wasserstoff angeordnet ist.

8. Kryospeichersystem nach zumindest einem der vorhergehenden Ansprüche,
**dadurch gekennzeichnet, dass** in einer das geförderte Medium ableitenden Druckleitung (22) der Kryopumpe (21) ein federbelastetes Rückschlagventil (25) oder ein Wechselventil (26) angeordnet ist, so dass die das geförderte Medium ableitende Druckleitung (22) am federbelasteten Rückschlagventil (25) oder am Wechselventil (26) in eine Einlassleitung (20) in den Innentank (1) übergeht.

9. Kryospeichersystem nach Anspruch 8,
**dadurch gekennzeichnet, dass** der Innentank (1) über eine Betankungsschnittstelle (14) betankt werden kann, wobei die Betankung zumindest abschnittsweise über eine Entnahmeleitung (27) erfolgt, wobei bevorzugt die Betankung über das federbelastete Rückschlagventil (25) oder das Wechselventil (26) und die Einlassleitung (20) in den Innentank (1) erfolgt.

10. Kryospeichersystem nach Anspruch 8 oder 9,
**dadurch gekennzeichnet, dass** das Wechselventil (26) einen integrierten Schwebekörper (28) aufweist, wobei das Eigengewicht des Schwebekörpers (28) den Schwebekörper (28) in einer unteren End-Position hält, so dass die Einlassleitung (20) zur Befüllung des Innentanks (1) freigegeben ist, wobei bei einer Inbetriebnahme der Kryopumpe (21) der Schwebekörper (28) durch den Förderstrom angehoben wird, so dass er die Einlassleitung (20) zum Innentank (1) verschließt und der Förderstrom ausschließlich zum Verbraucher (5) gepumpt wird.

## Claims

1. Cryostorage system, comprising a cryocontainer for storing hydrogen, having an inner tank (1) and an outer container (2), wherein at least one cryopump (21) is arranged in the inner tank (1) of the cryocontainer, the cryopump (21) being fully surrounded by cryogenic fluid during normal operation and/or the drive of the cryopump (21) being adapted to work at very low temperatures, the cryopump (21) delivering liquid and gaseous hydrogen in one or more stages to a consumer (5) at a pressure higher than the pressure in the inner tank (1), **characterized in that** the cryopump (21) is configured as a linear pump which delivers on both sides, with a left and a right delivery flow, wherein the left and/or right delivery flow of the linear pump is configured selectively to deliver gaseous or liquid hydrogen.

2. Cryostorage system according to Claim 1,
**characterized in that** a gas extraction line (24) is configured to be at least at one intake port of the cryopump (21), the open end of which gas extraction line is configured to be in the vicinity of the top of the inner tank (1), and/or gaseous hydrogen being situated at the open end of the gas extraction line (24) during normal operation, so that, via the gas extraction line (24), gaseous hydrogen can be extracted from the inner tank (1) by the cryopump (21).

3. Cryostorage system according to Claim 1 or 2,
**characterized in that** gaseous or liquid hydrogen may selectively be delivered at least at one intake port of the cryopump (21),
preferentially via a check valve (23) for switching between gaseous and liquid hydrogen.

4. Cryostorage system according to at least one of the preceding claims,
**characterized in that** the left and/or right delivery flow of the linear pump is configured selectively to deliver gaseous or liquid hydrogen, via in each case a check valve (23) near to the pump for switching between gaseous and liquid hydrogen.

5. Cryostorage system according to at least one of the preceding claims,
**characterized in that** the cryocontainer is adapted so that a partial flow of the warmed hydrogen, i.e. the extracted hydrogen downstream of a heat exchanger (7), can be returned via a gas return line (6) into the inner tank (1) in order to increase the inner tank pressure, preferentially via a check valve (13) for the gas return to the inner tank (1).

6. Cryostorage system according to Claim 5,
**characterized in that** a pressure reducer (9), preferentially with a downstream pressure safety valve (10), is installed in the gas return line (6) for the gas return to the inner tank (1).

7. Cryostorage system according to at least one of the preceding claims,
**characterized in that** a buffer container (8) for warm hydrogen is arranged between the cryopump (21) and the consumer (5).

8. Cryostorage system according to at least one of the preceding claims,
**characterized in that** a spring-loaded nonreturn valve (25) or a shuttle valve (26) is arranged in a pressure line (22) of the cryopump (21), which takes off the delivered medium, so that the pressure line (22) which takes off the delivered medium joins at the spring-loaded nonreturn valve (25) or at the shuttle valve (26) with an inlet line (20) into the inner tank (1).

9. Cryostorage system according to Claim 8,
**characterized in that** the inner tank (1) is capable of being filled via a filling interface (14), the filling taking place at least in part via an extraction line (27), preferentially the filling taking place via the spring-loaded nonreturn valve (25) or the shuttle valve (26) and the inlet line (20) into the inner tank (1).

10. Cryostorage system according to Claim 8 or 9,
**characterized in that** the shuttle valve (26) has an integrated float (28), the inherent weight of the float (28) keeping the float (28) in a lower end position so that the inlet line (20) for filling the inner tank (1) is uncovered, the float (28) being raised by the delivery flow when the cryopump (21) is started so that it blocks the inlet line (20) to the inner tank (1) and the delivery flow is pumped only to the consumer (5).

## Revendications

1. Système de stockage cryogénique, comprenant un contenant cryogénique destiné à stocker de l'hydrogène, avec un réservoir intérieur (1) et un contenant extérieur (2),
où au moins une cryopompe (21) est disposée dans le réservoir intérieur (1) du contenant cryogénique, la pompe cryogénique (21) étant, en fonctionnement normal, entièrement entourée de fluide cryogénique et/ou où l'entraînement de la pompe cryogénique (21) est adapté pour fonctionner à des températures très basses, où la pompe cryogénique (21) refoule de l'hydrogène liquide et gazeux, en une ou plusieurs étapes, vers un consommateur (5), à une pression supérieure à la pression dans le réservoir intérieur (1), **caractérisé en ce que** la pompe cryogénique (21) est réalisée sous la forme d'une pompe linéaire, qui refoule des deux côtés, avec un débit de refoulement gauche et un débit de refoulement droit,
où le débit de refoulement gauche et/ou le débit de refoulement droit de la pompe linéaire est conçu pour refouler, au choix, de l'hydrogène gazeux ou liquide.

2. Système de stockage cryogénique selon la revendication 1,
**caractérisé en ce qu'**au moins sur un embout d'aspiration de la pompe cryogénique (21) est formée une conduite de prélèvement de gaz (24), dont l'extrémité ouverte est formée à proximité du plafond du réservoir intérieur (1) et/ou dans lequel de l'hydrogène gazeux se trouve au niveau de l'extrémité ouverte de la conduite de prélèvement de gaz (24) en fonctionnement normal, de telle sorte que de l'hydrogène gazeux peut être prélevé du réservoir intérieur (1) par la cryopompe (21) via la conduite de prélèvement de gaz (24).

3. Système de stockage cryogénique selon la revendication 1 ou 2,
**caractérisé en ce que** de l'hydrogène gazeux ou liquide peut être refoulé au choix au moins au niveau d'un embout d'aspiration de la pompe cryogénique (21), de préférence via une soupape d'arrêt (23) pour passer entre l'hydrogène gazeux et l'hydrogène liquide.

4. Système de stockage cryogénique selon au moins l'une des revendications précédentes,
**caractérisé en ce que** le flux de refoulement gauche et/ou le flux de refoulement droit de la pompe linéaire sont réalisés pour refouler au choix de l'hydrogène gazeux ou liquide respectivement par une soupape d'arrêt (23) proche de la pompe pour passer entre l'hydrogène gazeux et l'hydrogène liquide.

5. Système de stockage cryogénique selon au moins l'une des revendications précédentes,
**caractérisé en ce que** le contenant cryogénique est mis au point pour pouvoir ramener un flux partiel de l'hydrogène chauffé, donc de l'hydrogène prélevé après un échangeur de chaleur (7), par une conduite de retour de gaz (6) dans le réservoir intérieur (1) pour augmenter la pression de réservoir intérieur, de manière préférée par une soupape d'arrêt (13) pour le retour de gaz au réservoir intérieur (1).

6. Système de stockage cryogénique selon la revendication 5,
**caractérisé en ce qu'**un réducteur de pression (9), de manière préférée avec une soupape de sécurité de pression (10) montée en aval, est monté dans la conduite de retour de gaz (6) pour le retour de gaz vers le réservoir intérieur (1).

7. Système de stockage cryogénique selon au moins l'une des revendications précédentes,
**caractérisé en ce qu'**un contenant tampon (8) pour de l'hydrogène chaud est disposé entre la pompe cryogénique (21) et le consommateur (5).

8. Système de stockage cryogénique selon au moins l'une des revendications précédentes,
**caractérisé en ce qu'**une soupape anti-retour à ressort (25) ou une soupape de commutation (26) est disposé dans une conduite sous pression (22) de la pompe cryogénique (21) évacuant le fluide refoulé, de telle sorte que la conduite sous pression (22) évacuant le fluide refoulé se prolonge, au niveau de la soupape anti-retour à ressort (25) ou de la soupape de commutation (26), en une conduite d'entrée (20) dans le réservoir intérieur (1).

9. Système de stockage cryogénique selon la revendication 8,
**caractérisé en ce que** le réservoir intérieur (1) peut être rempli via une interface de remplissage (14), le remplissage s'effectuant au moins par sections via une conduite de prélèvement (27), le remplissage s'effectuant de préférence via la soupape anti-retour à ressort (25) ou la soupape de commutation (26) et la conduite d'entrée (20) dans le réservoir intérieur (1).

10. Système de stockage cryogénique selon la revendication 8 ou 9,
**caractérisé en ce que** le sélecteur de circuit (26) comporte un corps flottant (28) intégré, le propre poids du corps flottant (28) maintenant le corps flottant (28) dans une position d'extrémité inférieure de telle sorte que la conduite d'admission (20) est dégagée pour remplir le réservoir intérieur (1), le corps flottant (28) étant relevé par le flux de refoulement lors d'une mise en service de la pompe cryogénique (21) de telle sorte qu'il ferme la conduite d'admission (20) menant au réservoir intérieur (1) et le flux de refoulement est pompé exclusivement vers le consommateur (5).
